Europäisches Patentamt

European Patent Office

Office européen des brevets

(11) Publication number: **0 194 819**
**B1**

(12) **EUROPEAN PATENT SPECIFICATION**

(45) Date of publication of patent specification: **30.01.91**

(21) Application number: **86301628.3**

(22) Date of filing: **07.03.86**

(51) Int. Cl.⁵: **B 60 P 7/13**

(54) **A container carrying chassis and a manually operated twistlock for use therein.**

(30) Priority: **09.03.85 GB 8506169**

(43) Date of publication of application:
**17.09.86 Bulletin 86/38**

(45) Publication of the grant of the patent:
**30.01.91 Bulletin 91/05**

(84) Designated Contracting States:
**AT BE CH DE FR GB IT LI LU NL SE**

(56) References cited:
**DE-A-2 209 804**
**FR-A-1 582 298**
**US-A-3 501 193**

(73) Proprietor: **International Ferry Freight Limited**
**Tivoli House South Street**
**Hull HU1 3QN North Humberside (GB)**

(72) Inventor: **Dudding, Sheron Leslie**
**Peartree House Broomfleet**
**Brough North Humberside (GB)**

(74) Representative: **Ranson, Arthur Terence et al**
**W.P. Thompson & Co. Coopers Building Church**
**Street**
**Liverpool L1 3AB (GB)**

Courier Press, Leamington Spa, England.

## Description

The present invention relates to a container carrying chassis comprising a plurality of manually operated twistlocks to secure a container to the chassis and, more particularly, to a container carrying chassis comprising a safety device to disable the chassis and prevent operation thereof when any of the manually operated twistlocks is either unlocked or incorrectly locked. The present invention also relates to a manually operated twistlock for use in a container carrying chassis.

International Standards Organisation (I.S.O.) twistlocks are used for locating containers and the like on trailers or other chassis usually for transportation purposes. Such containers are provided with I.S.0. corner castings with which the twistlocks are engageable. A container is typically provided with an I.S.0. casting in each corner and a trailer chassis or the like will be provided with correspondingly spaced twistlocks. The twistlocks are manually operated.

It is known from, for example, US-A-3501193 to provide twistlocks with an indicator which indicates whether the locking member of the twistlock is correctly aligned with a respective corner casting of a container. However, whilst these known twistlocks ensure that an indication is provided as each twistlock on the container carrying chassis is correctly aligned to engage with a respective corner casting of the container, they cannot prevent accidents occurring in the event of a human operator ignoring or failing to notice that a twistlock is not correctly locked. Human reliability in these matters is very poor and yet, the container can represent a very dangerous hazard if it is moved whilst not securely secured to the chassis.

By way of example, a typical tipping chassis has four drop-down twistlocks for mating co-operation with respective I.S.0. corner castings of a container which is to be carried on the chassis. Two of the twistlocks are secured to a member which is hinged or pivotable on the chassis at the rear end thereof, and the other two are carried by a bolster located at the front of the chassis. The bolster is conveniently secured to one part of a telescopically extendible ram, whilst another part of the ram, moveable with respect to the first, is secured on the chassis.

The container to be carried on the tipping chassis is structurally rigid and can be tipped, to discharge its contents by elevating the ram so lifting the front end of the container which is mounted on the bolster. The drop-down twistlocks are the only means by which the container is located on the chassis. These twistlocks are manually actuated by the operator and if the ram is elevated when they have been incorrectly applied the consequences can be disastrous. The known tipping chassis have no means of preventing tipping when the twistlocks are incorrectly applied. Of course, if the container is transported on the chassis when one or more of the twistlocks are incorrectly applied, this can also be disastrous.

It is an object of the present invention to provide a container carrying chassis which is disabled and prevented from operating if any of the twistlocks is incorrectly applied.

According to the present invention, there is provided a container carrying chassis comprising a plurality of manually operated twistlocks which are adapted, in use, to releaseably secure a container to the chassis, chassis drive means and a safety device to monitor the locked and unlocked positions of each twistlock, characterised in that the safety device further comprises disabling means to disable the chassis drive means and prevent operation of the chassis if any of the twistlocks is incorrectly applied.

Each twistlock comprises a twistlock head which is received slideably and rotatably in a body member. The twistlock head has a threaded stem which carries a nut member and a generally Y-shaped head for co-operating engagement with a corner casting of a container. In the released position, the twistlock head is in a drop-down position and to fasten the twistlock, the head is moved axially upwardly and rotated through 90°. To secure the twistlock in position the nut is wound on the threaded stem towards the body member and as the nut member takes its reaction against the body member the twistlock head is locked securely in position.

Preferably, the safety device comprises switch actuating means carried by the twistlock head and switch means carried by the body member, such that, as the twistlock head is moved relative to the body member into its locked position, the switch means is actuated by the switch actuating means and enables the chassis drive means.

Preferably, the switch means are connected in series with each other and with an operating circuit of the drive means, such that the chassis drive means is disabled if any of the switch means are open circuit.

Preferably, the switch actuating means comprises a cam plate which is carried by the twistlock head and actuatingly engages the switch means as the twistlock head is locked in position.

Preferably, the nut provided to secure the twistlock head in its locked position engages the cam plate with the switch means as it takes reaction against the body member.

Preferably, the manually operated twistlock comprises a twistlock body member, a twistlock head movable in the body member between a fastened and an unfastened position, fastening means for securing the twistlock head in its fastened position, switch means carried by the body member and switch actuating means carried by the twistlock head so as to be movable relative to the switch means, such that, in use, the switch actuating means actuates the switch means when the twistlock head is correctly fastened, the switch actuating means comprising a cam plate which is rotatable with and axially movable with respect to the twistlock head and which is driven into actuating engagement with the switch means by the fastening means when the fastening means secures the twistlock head in its fastened position.

More specifically, the twistlock head has a threaded stem which projects from the body and the securing means comprises a nut member threadingly mounted thereon. The cam plate is disposed between the nut member and the body member. By virtue of this arrangement the switch means is only actuated when the manually operated twistlock is correctly locked/fastened. The twistlock incorporating the safety switch can therefore be used as part of a safety system, for example with a tipping chassis to prevent tipping of the chassis or with a chassis immobilising system such as a brake system, to prevent use of the chassis if any of the twistlocks is incorrectly fastened. Another possible application of the twistlock provided with the switch means is on a standard chassis to provide a signal that the twistlocks have all been correctly fastened.

The switch means may be electrical, hydraulic or pneumatic.

An embodiment of the present invention will now be described, by way of example, with reference to the accompanying drawings, in which:

Fig. 1 is a perspective view of an I.S.O. twistlock incorporating a safety device and showing the twistlock in its drop-down unfastened position;

Fig. 2 is a side view of the twistlock of Fig. 1 in its fastened position; and

Fig. 3 is a side view of the twistlock of Figs. 1 and 2 in its locked position with the safety device actuated.

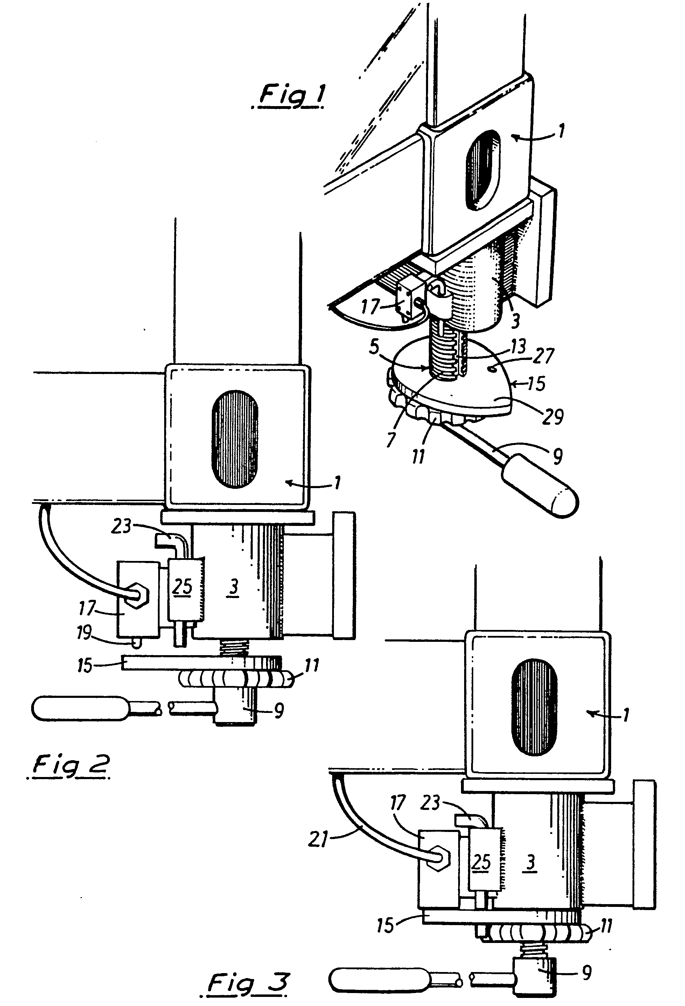

Referring to the drawings of Figs. 1 to 3, there is shown an I.S.O. twistlock for use in a tipping chassis. Also shown in the drawings is the corner detail of a container illustrating the I.S.O. corner casting 1 with which the twistlock is co-operable. The twistlock comprises a body member 3 which has a bore receiving a threaded shaft 7 of a twistlock head 5. The twistlock head has a Y-shaped head (not visible in the drawings) which fits into the I.S.O. corner casting 1. The threaded shaft 7 is freely slidable axially and rotatable in the bore of the body. A handle 9 is carried by the free end of the twistlock head and this serves to rotate the twistlock head and to move it axially within the body member 3. A nut member 11 in the form of a star wheel is threadingly engaged with the threaded shaft 7 of the twistlock head 5. An axial keyway 13 is formed in the threaded shaft 7 and a cam plate 15 is received on the shaft 7 so as to be axially slidable thereon but keyed to it so as to rotate with it.

The cam plate 15 serves as actuating means for switch means 17 mounted on the body member. The cam plate 15 is disposed between the nut member 11 and the body member. The switch means 17 is provided with a movable switch member 19.

In the case of a tipping chassis for a container, four I.S.O. twistlocks are provided, one at each corner of the chassis. Two are mounted on a hinged plate at the rear of the chassis and two on a bolster at the front of the chassis. The bolster is elevated by a telescopic ram in order to tip the container mounted on the chassis. Thus, it is extremely important that the container is correctly fastened to the chassis before tipping is commenced.

Thus, the present invention proposes a safety system to prevent tipping of the chassis when the twistlocks are incorrectly fastened. By providing four twistlocks with the described switch means it is possible to ensure that a control valve operating the tipping mechanism is disabled when the twistlocks are correctly applied.

In use, a container is positioned on a chassis and the twistlocks fastened and locked. This entails moving the twistlock head 5 upwardly in the body member 3 and rotating it through 90° so that the Y-shaped head co-operates with the mating I.S.O. corner casting of the container. In the case of the illustrated twistlock, this rotation of the twistlock head causes the cam plate 15 to rotate so that its lobed end 29 is disposed axially below the switch means 17. Subsequent rotation of the nut member 11 to lock the twistlock head in its fastened position causes the cam plate 15 to move upwardly and the cam lobe 29 actuates the moveable switch member 19. This signals that the twistlock is correctly locked/fastened. It will be appreciated that the reaction of the nut member is taken against the body member by way of the cam plate.

Each switch means of the four twistlocks is wired in series such that if any of them is not actuated, the tipping mechanism is disabled.

In the illustrated embodiment, the switch means comprises a pneumatic sensing valve in which the valve blocks the pneumatic tipping signal to the raise-hold-lower control valve. Part of the piping is shown at 21. The sensing valve is spring loaded to fail safe and any break or.collapse of the piping will do the same.

It will be appreciated that the pneumatic sensing valve of the illustrated embodiment may be replaced by a hydraulic valve or an electric switch. The use of a pneumatic valve is particularly convenient when the tipping mechanism of the chassis is pneumatically operated.

The illustrated embodiment is also provided with a mechanical lock mechanism comprising a bolt 23 which is carried in a lock body 25 and which is adapted to pass through a bore 27 in the cam plate 15 and to engage with the shoulders of the star wheel 11. This mechanical lock mechanism serves to ensure that once the twistlock head has been moved into the fastened position and the nut member tightened to actuate the switch means, the nut member cannot work loose and so allow the twistlock head to be unfastened.

Furthermore, by virtue of the fact that the bolt passes through the cam plate, the twistlock-head is directly prevented from rotating.

In order to ensure that this interlock is applied, a further safety switch may be provided to monitor the position of this mechanical lock.

Whilst the present invention has been described with reference to a trailer chassis for use in transporting containers, the present invention is not limited solely to such trailer chassis. It also has application in lifting cranes and trucks, wherever a chassis for carrying the container is secured to the container by manually operated twistlocks. In this latter respect it will be understood that if the trailer were to be lifted whilst any of the twistlocks is not correctly fastened the consequences could be disastrous.

## Claims

1. A container carrying chassis comprising a plurality of manually operated twistlocks which are adapted, in use, to releaseably secure a container to the chassis, chassis drive means and a safety device to monitor the locked and unlocked positions of each twistlock, characterised in that the safety device further comprises disabling means (17) to disable the chassis drive means and prevent operation of the chassis if any of the twistlocks is incorrectly applied.

2. A container carrying chassis according to claim 1, characterised in that each twistlock comprises a twistlock head (5) which is rotatable in and axially slidable in a body member (3), and that the safety device comprises switch actuating means (15) carried by the twistlock head (5) and switch means (17) carried by the body member (3), such that as the twistlock head (5) is moved relative to the body member (3) into its locked position the switch means (17) is actuated by the switch actuating means (15) and enables the chassis drive means.

3. A container carrying chassis according to claim 2, characterised in that the switch means (17) are connected in series with each other and with an operating circuit of the drive means, such that the chassis drive means is disabled if any of the switch means (17) are open circuit.

4. A container carrying chassis according to claim 2 or 3, characterised in that the switch actuating means (15) comprises a cam plate (15) which is carried by the twistlock head (5) and actuatingly engages the switch means (17) as the twistlock head (5) is locked in position.

5. A container carrying chassis according to claim 4, characterised in that securing means (11) are provided to secure the twistlock head (5) in its locked position and that said securing means (11) actuatingly engages the cam plate (15) with the switch means (17) as it takes reaction against the body member (3).

6. A container carrying chassis according to claim 5, characterised in that the securing means (11) comprises a nut (11) carried on a threaded stem of the twistlock head (5) and that the cam plate (15) is rotatable with and axially slidable along the threaded stem so that as the nut (11) is tightened on the threaded stem it forces the cam plate (15) into actuating engagement with the switch means (17).

## Patentansprüche

1. Containertragrahmen, der eine Vielzahl von manuell bedienten Riegeln umfaßt, die bei Verwendung dazu dienen, einen Container lösbar auf dem Rahmen zu befestigen, sowie ein Antriebsmittel für den Rahmen und eine Sicherheitsvorrichtung zur Aufzeichnung der geschlossenen und offenen Stellungen jedes Riegels vorgesehen sind, dadurch gekennzeichnet, daß die Sicherheitsvorrichtung überdies ein Sperrmittel (17) umfaßt, welches das Antriebsmittel des Rahmens betriebsunfähig macht und den Betrieb des Rahmens verhindert, wenn einer der Riegel unsachgemäß angebracht wurde.

2. Containertragrahmen nach Anspruch 1, dadurch gekennzeichnet, daß jeder Riegel einen Riegelkopf (5) unfaßt, der in einem Körperelement (3) axial verschiebbar und drehbar ist, und daß die Sicherheitsvorrichtung Schalterbetätigungsmittel (15) auf dem Riegelkopf (5) und Schaltermittel (17) auf dem Körperelement (3) umfaßt, so daß, wenn der Riegelkopf (5) in bezug zu dem Körperelement (3) in seine gesperrte Stellung bewegt wird, das Schaltermittel (17) durch das Schalterbetätigungsmittel (15) betätigt wird und das Antriebsmittel des Rahmens freigibt.

3. Containertragrahmen nach Anspruch 2, dadurch gekennzeichnet, daß die Schaltermittel (17) miteinander und mit einem Betriebsschalter des Antriebsmittels in Reihe geschaltet sind, so daß das Antriebsmittel des Rahmens außer Betrieb gesetzt wird, wenn bei einem der Schaltermittel (17) der Kreis unterbrochen ist.

4. Containertragrahmen nach einem der Ansprüche 2 oder 3, dadurch gekennzeichnet, daß das Schalterbetätigungsmittel (15) eine Nockenscheibe (15) umfaßt, die von dem Riegelkopf (5) getragen wird und das Schaltermittel (17) betätigt, wenn der Riegelkopf (5) in Position versperrt wird.

5. Containertragrahmen nach Anspruch 4, dadurch gekennzeichnet, daß Sicherheitsmittel (11) zur Sicherung des Riegelkopfes (5) in seiner verriegelten Stellung vorgesehen sind, und das Sicherheitsmittel (11) auslösend in die Nockenscheibe (15) mit dem Schaltermittel (17) eingreift, wenn durch das Körperelement (3) Gegendruck erzeugt wird.

6. Containertragrahmen nach Anspruch 5, dadurch gekennzeichnet, daß das Sicherungsmittel (11) eine Schraubenmutter (11) umfaßt, die auf einem Gewindezapfen des Riegelkopfes (5) befestigt ist, und daß die Nockenscheibe (15) innerhalb des Gewindezapfens drehbar und entlang des Gewindezapfens axial verschiebbar ist, so daß, wenn die Schraubenmutter (11) auf dem Gewindezapfen angezogen wird, die Nockenscheibe (15) in auslösenden Eingriff mit dem Schaltermittel (17) gebracht wird.

## Revendications

1. Châssis support de conteneur comprenant une pluralité de verrous tournants à mouvement de rotation-coulissement, à manoeuvre manuelle, adaptés, lors de l'utilisation, pour fixer de manière amovible un conteneur au châssis, des moyens de déplacement du châssis et un dispositif de sécurité pour contrôler les positions verrouillées et non-verrouillées de chaque verrou, caractérisé par le fait que le dispositif de sécurité comprend en outre des moyens (17) de déconnection pour mettre hors service les moyens de déplacement du châssis et pour empêcher le fonctionnement du châssis si l'un quelconque des verrous est disposé de manière incorrecte.

2. Châssis support de conteneur selon la revendication 1, caractérisé par le fait que chaque verrou comprend une tête de verrou (5) susceptible de tourner dans, et de coulisser axialement, dans un corps (3), et que le dispositif de sécurité comprend des moyens d'actionnement de commutation (15) portés par la tête de verrou (5) et un moyen de commutation (17) porté par le corps (3), de façon que lorsque la tête de verrou (5) est déplacée par rapport au corps (3), pour se trouver dans sa position de verrouillage, le moyen de commutation (17) est actionné par les moyens d'actionnement de commutation (15) et libère les moyens de déplacement du châssis.

3. Châssis support de conteneur selon la revendication 2, caractérisé par le fait que les moyens de commutation (17) sont reliés en série entre eux et à un circuit de fonctionnement des moyens de déplacement, de manière que le moyen de déplacement du châssis soit mis hors service si l'un quelconque des moyens de commutation (17) se trouve en circuit ouvert.

4. Châssis support de conteneur selon la revendication 2 ou 3, caractérisé par le fait que le moyen d'actionnement de commutation (15) comprend un plateau de came (15) porté par la tête de verrou (5), et vient en prise avec le moyen de commutation (17) pour l'actionner lorsque la tête de verrou (5) est en position de verrouillage.

5. Châssis support de conteneur selon la revendication 4, caractérisé par le fait que des moyens de fixation (11) sont prévus pour fixer la tête de verrou (5) dans sa position de verrouillage, et lesdits moyens de fixation (11) bloquent le plateau de came (15) à l'aide du moyen de commutation (17) alors qu'il subit une réaction contre le corps (3).

6. Châssis support de conteneur selon la revendication 5, caractérisé par le fait que les moyens de fixation (11) comprennent un écrou (11) porté sur une tige filetée de la tête de verrou (5), et le plateau de came (15) est susceptible de tourner avec et de coulisser axialement le long de la tige filetée, pour que, lorsque l'écrou (11) est assujetti sur la tige filetée, le plateau de came (15) vienne obligatoirement en prise avec le moyen de commutation (17).

Fig 1

Fig 2

Fig 3